Europäisches Patentamt

European Patent Office

Office européen des brevets

(11) Veröffentlichungsnummer: **0 209 046**
**A2**

(12) **EUROPÄISCHE PATENTANMELDUNG**

(21) Anmeldenummer: 86109277.3

(22) Anmeldetag: 07.07.86

(51) Int. Cl.⁴: **H02G 15/076**

(30) Priorität: 10.07.85 DE 3524637

(43) Veröffentlichungstag der Anmeldung:
**21.01.87 Patentblatt 87/04**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Giebel, Wolfgang, Dipl.-Ing. (FH)**
**Mathildenstrasse 31a**
**D-8033 Planegg(DE)**
Erfinder: **Laar, Hans, Dipl.-Ing. (FH)**
**Plinganserstrasse 32**
**D-8000 München 70(DE)**
Erfinder: **Schramm, Josef**
**Alfred-Neumann-Anger 4**
**D-8000 München 83(DE)**

(54) **Verzweigergehäuse für Nachrichtenkabel.**

(57) Die Erfindung befaßt sich mit einem Verzweigergehäuse (1) für Nachrichtenkabel, bei dem die Anschlußeinheit (15) für die einzelnen Adern fest in einem Bodenteil (3) des Verzweigergehäuses (1) integriert ist, wobei zunächst beim Kontaktierungsvorgang die einzelnen Adern in Fixiermitteln (4, 5, 6, 13) eingelegt werden. Das Verzweigergehäuse (1) besitzt einen schwenkbaren Deckelteil (2), mit dessen Hilfe schließlich die Kontaktierung der einzelnen Adern vorgenommen wird. Damit ist das Kontaktierungswerkzeug im Verzweigergehäuse (1) integriert.

FIG 1

EP 0 209 046 A2

## Verzweigergehäuse für Nachrichtenkabel

Die Erfindung betrifft ein Verzweigergehäuse für Nachrichtenkabel mit Kontaktelementen für ankommende und abgehende Kabel bzw. Leitungen, wobei der Anschlußraum in Längsrichtung geteilt und bei Bedarf zugänglich ist und bei dem Fixiereinrichtungen für die Kabel bzw. Leitungen vorgesehen sind und bei dem weiterhin die Kontaktelemente im Bodenteil integriert sind.

Aus der DE-OS 25 20 270 ist nun ein Verzweigergehäuse der vorher beschriebenen Art bekannt. Dabei sind die einzelnen Kontakteinheiten als zunächst separate und einsetzbare Verbindungsklemmen im Boden des Gehäuses eingelagert. Dies bedeutet, daß die Verbindungsklemmen, zum Beispiel im Form von Klemmleisten eingeschraubt werden, an welchen dann die Adern angeschlossen werden. Dies ist jedoch in mehrfacher Hinsicht eine Erschwernis. Man benötigt entsprechende Spritzgießwerkzeuge und in den daraus erstellten Teilen werden dann die Anschlußeinheiten montiert. Dieses vorkonfektionierte Teil wird nun im Endverzweigergehäuse befestigt, und anschließend erfolgt die Verbindung der einzelnen Adern mit hierfür vorgesehenen Werkzeugen. Es sind also entsprechende Werkzeuge erforderlich, mit deren Hilfe die Montagearbeiten ausgeführt werden.

Für vorliegende Erfindung ergibt sich nun die Aufgabe, ein Verzweigergehäuse zu schaffen, bei dem in möglichst einfacher Weise ohne Zuhilfenahme von besonderen Werkzeugen die Verbindungen der einzelnen Adern hergestellt wer den können und dies bezüglich der Montage des Verzweigergehäuses selbst wie auch bezüglich der Kontaktierung der einzelnen Adern. Die gestellte Aufgabe wird nun mit einem Verzweigergehäuse der eingangs beschriebenen Art dadurch gelöst, daß Kontaktierungseinrichtungen der Lage der Kontaktelemente der im Bodenteil befindlichen Anschlußeinheit entsprechend im Deckelteil des Verzweigergehäuses angeordnet sind.

Vorteile der Erfindung sind nun darin zu sehen, daß einerseits keine Montage von Anschlußeinheiten und dergleichen erfolgen muß und daß andererseits das Verzwigergehäuse bereits so ausgebildet ist, daß die Kontaktierung der einzelnen Adern in den Kontaktelementen nach erfolgter Fixierung über den Kontaktelementen lediglich durch Schließen des Gehäuses vorgenommen wird. Die verwendete Anschlußeinheit kann sich z.B. aus einzelnen Kontaktelementen zusammensetzen. Ebenso ist jedoch auch eine Anschlußeinheit als Komplettbaustein verwendbar, wie auch die Kombination mehrerer kleinerer Einheiten möglich ist. Durch die einfache Fixierung der einzelnen adern ist es möglich daß in übersichtlicher Weise die Zuordnung festgelegt werden kann, wobei die Einzelkontaktierung nicht vorgenommen wird. Damit ist die eigentliche manuelle Montage vorbereitend bereits abgeschlossen. In dieser fixierten Lage erfolgt schließlich durch Niederdrücken des Deckelteils des Verzweigergehäuses auf den Bodenteil infolge der entsprechenden Ausgestaltung die Kontaktierung, wobei als Kontaktelemente z.B. die bekannten Messerkontakte zur abisolierfreien Verbindung von Adern Verwendung finden können. Diese Kontakte sind so ausgebildet, daß auch ein Meßadapter angeschlossen werden kann. Das sonst hierfür benötigte Montagewerkzeug, mit dem zudem nur Einzelkontakte betätigt werden können, ist hier überflüssig. Der große Vorteil ist eben bei dem Ausfüh rungsbeispiel gemäß der Erfindung, daß alle mit Adern belegten Kontakte gleichzeitig kontaktiert werden, während die nicht belegten Kontakte keine Veränderung erfahren. Diese nicht betätigten Kontakte können ohne weiteres zu beliebig späteren Zeitpunkten in derselben Weise mit Adern kontaktiert werden, wobei die bereits kontaktierten Kontaktverbindungen unberührt bleiben. Außerdem ist von Vorteil, daß im klappbaren Deckelteil des erfindungsgemäßen Verzweigergehäuses gleichzeitig Schutzkappen an den den Kontakten entsprechenden Stellen eingelagert sein können, die beim Kontaktieren über den entsprechenden Kontakten als Schutz bleibend abgesetzt werden können. Auch diese Schutzkappen bleiben beim späteren Wiederöffnen unberührt über den Kontakten, so daß auch danach der Schutz bestehen bleibt. Die Schutzkappen können als Einzelelemente ausgebildet sein oder auch gruppenweise zusammengefaßt werden, so daß gleichzeitig ganze Funktionsgruppen abgedeckt werden. Das Deckelteil des Verzweigergehäuses besitzt also neben der Schutzfunktion für die gesamte Anordnung zusätzlich die Funktion des Kontaktierungswerkzeuges, wobei es dann gleichzeitig über alle zu kontaktierenden Kontakte wirkt. Die Schließkräfte werden sowohl durch optimale Verschlußgeometrie - Kontakte schliessen infolge des Klappvorganges nacheinander, nicht gleichzeitig -als auch durch geeignete Verschlußsequenz niedrig gehalten. Letzteres geschieht beispielsweise dadurch, daß alle ankommenden Adern des Kabels in einem Arbeitsgang kontaktiert werden, während im nächsten Arbeitsschritt alle oder auch nur ein Teil der abgehenden Leitungen verbunden werden. Die Schutzfunktion kann erweitert werden, wenn die bereits beschriebenen Schutzkappen Verwendung finden.

Die Erfindung wird nun anhand von drei Figuren näher erläutert.

Figur 1 zeigt eine zum Teil aufgebrochene Draufsicht auf das Verzweigergehäuse.

Figur 2 zeigt eine Seitenansicht und

Figur 3 einen Querschnitt, wobei dieser Schnitt in der Ebene eines Kontaktes liegt.

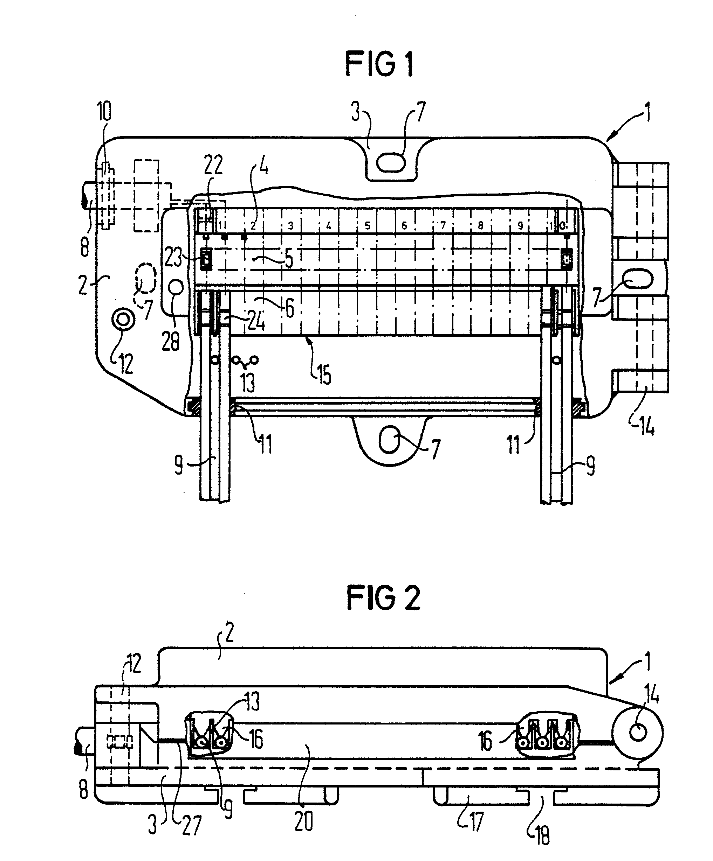

In Figur 1 ist ein Ausführungsbeispiel gemäß der Erfindung in einer Draufsicht dargestellt, wobei ein Teilaufbruch die Sicht auf die innere Anordnung der integrierten, fest eingelagerten Anschlußeinheit 15 freigibt. Dabei ist erkennbar, daß die Adern des ankommenden Kabels 8 über entsprechende Kabelabfangungen und Einführungsdichtungen 10 ins Verzweigergehäuse 1 seitlich eingeführt werden. Die einzelnen Adern werden zunächst in der Lage der Kontaktelemente 22 der Anschlußeinheit 15 in Fixierungsmitteln 4 ohne Kontaktierung festgelegt. Die einzelnen Kontaktelemente 22 sind innerhalb der Anschlußeinheit 15 zu den abgehenden Kontaktelementen 24 geführt, an welchen die abgehenden Leitungen 9 kontaktiert werden. Dazwischen sind diese Kontaktelemente 22-24 überbrückend Anschlußmöglichkeiten 23 für weitere Anschlüsse, insbesondere für Sicherungselemente z.B. Stromsicherungen, Überspannungsableiter u.ä. angeordnet. Diese Anschlußmöglichkeiten 23 sind entweder als Federelemente, als Durchrisse oder ähnliches ausgebildet. Das Verzweigergehäuse 1 besteht aus einem Bodenteil 3, in dem die Anschlußeinheit 15 integriert ist, und aus einem Deckelteil 2. Die Anschlußeinheit 15 besteht aus Ausnehmungen im Bodenteil 3, in die die Kontakte eingeführt sind. Ein in Ausnehmungen auf die Kontakte aufgesetztes Spritzgußteil sichert die Kontakte vor unbeabsichtigtem Berühren und Herausfallen. Bodenteil 3 und Deckelteil 2 sind in diesem Ausführungsbeispiel über ein Gelenk 14 klappbar miteinander verbunden. Im Deckelteil 2 befinden sich weitere Merkmale gemäß der Erfindung, die später näher erläutert werden. In die ser Fig 1 ist jedoch weiterhin erkennbar, daß am Ausgang des Verzweigergeäuses 1 Anschlußmöglichkeiten für sogenannte "Drop-Wires" geschaffen sind. "Drop-wires" sind entweder Einzeladern oder es sind zwei Leiter über einen gemeinsamen Steg miteinander verbunden, so daß sie als Doppeleeitung anzusehen sind. Aus dem Verzweigergehäuse lassen sich beide "Drop-wire"-Varianten ausführen. Die Doppelleitungen werden durch Fixiermittel in Form von Dornen 13, welche in den Steg der "Drop-wires" eingedrückt werden, festgelegt, so daß sie auf diese Weise als Abfangung dienen. Die Abdichtung in der Abgangsrichtung erfolgt über entsprechende, anpaßbare Dichtungen 11, die entweder aus plastisch verformbaren Füllstücken bestehen können oder auch durch klemmende Ausschnitte im Deckelteil gebildet werden. Des weiteren ist ein Schließdruckmittel 12 angedeutet, das im wesentlichen aus einem Schraubmittel gebildet ist, mit dem durch einfaches Eindrehen nach dem Schließen des Deckelteiles 2 der benötigte Schließdruck, der durch die Kontaktierung erhöht wird, vergrößert werden kann. Wie bereits erwähnt, ist das Deckelteil 2 so ausgebildet, daß es während des Schließens, das heißt während des Niederdrückens, auf das Bodenteil 3 die Kontaktierung zwischen den bereits fixierten Adern und den integrierten Kontakten herstellt. Schließlich ist aus dieser Figur noch ersichtlich, daß die Befestigung des Verzweigergehäuses mit Hilfe der Befestigungsmittel 7, die hier im wesentlichen als Lang-und Querlöcher ausgeführt sind, in den zwei Hauptachsen des Gehäses erfolgen kann. Dadurch ist ein Ausgleich von Abweichungen beim Setzen der für die Befestigung benötigten Dübel möglich.

Die Figur 2 verdeutlicht das Verzweigergehäuse 1 in einer Seitenansicht, wobei im Bereich der Leitungsabführungen durch Aufbrüche der Innenbereich sichtbar wird. Das Ver zweigergehäuse 1 ist in der Trennebene 27 längsgeteilt und wird beim Zusammenklappen mit Hilfe einer eingelegten Elastomerdichtung wasserdicht verschlossen. Die beiden Gehäuseteile 2 und 3 sind über ein Scharnier 14 klappbar miteinander verbunden. Dabei besitzt das Deckelteil 2 im Inneren die nach unten auf die Kontakteinheit 15 gerichteten Kontaktierungseinheiten 16, die als Rippen ausgebildet sind und durch die die Adern 9 beim Niederdrücken des Deckelteils 2 in die Kontaktelemente eingepreßt und damit kontaktiert werden. Damit ist wie bereits beschrieben das zum Kontaktieren benotigte Werkzeug im Gehäuse selbst integriert. Weiterhin sind in diesem Bereich die Fixiermittel 13 in Form von Dornen sichtbar, mit denen die als abgehende Leitungen eingesetzten Doppelleitungen fixiert werden. An dem dem Scharnier 14 gegenüberliegenden Ende des Verzweigergehäuses 1 ist ein Schließdruckmittel 12 in Form einer Schraubenanordnung eingesetzt, mit deren Hilfe der Schließdruck beim Kontaktieren verstärkt werden kann. Ein Vorteil dieser Konstruktion ist auch, daß bei Benutzung dieses Schließdruckmittels 12 die sonst nötigen Andruckkräfte für das Kontaktieren nicht auf die Gehäusebefestigung wirksam werden und sich somit auch nicht negativ auf die Befestigung auf dem Untergrund, z.B. Wandputz, auswirken können. Bei der gezeigten Anordnung ist außerdem die Trennmöglichkeit EingangAusgang z.B. für Meßzwecke in einfacher Weise möglich. Weiterhin sind am Bodenteil 3 des Verzweigergehäuses 1 Befestigungsmittel 17-18 angeordnet, die wahlweise anstatt der bereits vorher beschriebenen Befestigungsmittel 7 verwendet werden können. Hier sind zusätzlich Nuten 18 angeordnet, in welche zum Beispiel Spannbänder eingeführt werden, so daß die Befestigung auch durch Anschellen erfolgen kann.

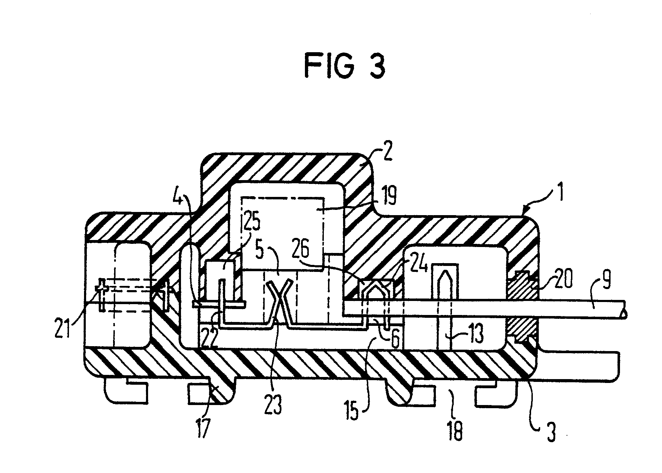

In Figur 3 wird der Innerbereich des Verzweigergehäuses 1 mit der im Bodenteil 3 integrierten Anschlußeinheit 15 vermittelt. Die Anschlußeinheit 15 besteht aus einer Reihe hintereinander angeordneter Kontaktkombinationen, wie sie nun anhand der hier sichtbaren Kontakelemente 22, 23, 24 näher erläutert wird. Das Kontaktelement 22 dient zur Aufnahme bzw. Kontaktierung einer Ader des in der Abfangvorrichtung 21 abgefangenen Eingangskabels, wobei diese ankommende Ader zunächst nur im Fixiermittel 4 gehalten wird. Der gezeigte Zustand hingegen verdeutlicht die Anordnung im bereits durch Schließen des Verzweigergehäuses 1 herbeigeführten kontaktierten Zustand. Das Kontaktelement 22 setzt sich nun fort zu einem doppelten Federkontaktelement 23, über den einerseits die Kontaktierung zum Ausgangskontaktelement 24 erfolgen kann und bei dem andererseits bei Bedarf zum Beispiel ein Sicherungselement oder ein Überspannungsableiter 19 anschließbar ist. Vernünftigerweise wird man eine Kasette mit z.B. 2 ˣ 10 Stück Sicherungselementen einsetzen. Das Deckelteil ist so angeformt, daß eine solche Kasette Platz findet. Für Spannungsableiter wird eine "gute Erde" benötigt. Diese kann über das eingeführte Kabel abgenommen werden. In der Figur 1 sieht man auch einen von außen nach innen reichenden Erdbolzen 28 für externe und interne Erdung. Im Deckelteil 2 sind nun in dieser Darstellung auch die Aussparungen 25 und 26 erkennbar, in denen entsprechende Schutzkappen für die Kontaktelemente eingesetzt werden können. Diese Schutzkappen werden bei dem Schließ-und damit Kontaktierungsvorgang klemmend über die Kontaktelemente 22 und 24 abgesetzt. Diese Schutzkappen enthalten bei Bedarf ein Korrosionsschutzmittel. Beim Wiederöffnen des Deckelteils 2 bleiben jedoch diese abgesetzten Schutzkappen über den Kontaktelementen erhalten, so daß der Schutz weiterhin bestehen bleibt. Beim ankommenden Kabel werden normalerweise keine Umschaltungen vorgenommen. Hier empfiehlt es sich, eine durchgehende "fettgefüllte" Schutzkappe zu verwenden. Oftmals geschieht es dann, daß das Verzweigergehüse nach der Einführung des an-·kommenden Kabels einige Zeit geschlossen bleibt, bis die Teilnehmerleitungen(Drop-wires) montiert sind. Werden diese nun im Verzweigergehüse montiert, dann können je nach Ausbaustufe ein oder mehrere Leitungspaare belegt und kontaktiert werden. Verwendet man eine geteilte Schutzkappe, dann sind jederzeit neue Drop-wires einführ-, kontaktier-und schützbar, ohne den Schutz der alten "Drop-wires" zu berühren. Jederzeit sind Neubelegungen oder auch Umrangierungen möglich. Im Abgangsbereich ist als Ausgangsdichtung 20 zum Beispiel ein Paßformstück zur Abdichtung eingesetzt. Schließlich ist einer der Dorne erkennbar, der als Fixiermittel 13 im Ausgangsbereich einen abgehenden "Drop-Wire" fixiert. Im Bodentiel 3 sind wiederum als Befestigungsmittel 17-18 Nuten und Stege erkennbar, in denen Spannbänder oder ähnliches für die Befestigung des Verzweigergehäuses 1 an Masten oder dgl. einsetzbar sind.

Diese Befestigungsmittel sind so mit denen aus Bild 2 kombiniert, daß sie die Spannbandbefestigung mit je zwei Spannbändern in zwei Ebenen zulassen. Für Kontaktelemente kommt zum Beispiel besonders die IDC-Technik (Insulation Displacement Contact) in Frage, wobei bei dieser erfindungsgemäßen Ausführungsform jedoch keine zusätzlichen Werkzeuge erforderlich sind. Das Verzweigergehäuse selbst besteht beispielsweise aus glasfaserverstärktem Polyester, in dem die Kontaktelemente eingebettet sind. Wählt man die Ausführung so, daß die Schutzkappen bereits im Werk richtig positioniert sind, dann ist zweckmäßigerweise als Sicherung gegen unbeabsichtiges Schließen und damit Kontaktieren mit Korrosionsschutz ein Zwischen stück zwischen dem Deckelteil 2 und dem Bodenteil 3 vorgesehen, das bei der Montage entfernt wird.

Ein weiterer Vorteil an diesem Verzweigergehäuse ist außerdem, daß die seitlichen Gehäusestege sehr niedrig gehalten sind, so daß sich eine sehr gute Zugänglichkeit bei der Montage ergibt. Das Verzweigergehüse gemäß der Erfindung hat also besonders auch dann besondere Vorteile wenn die Bestückung bzw. Beschaltung in mehreren Phasen erfolgt, da die bereits kontaktierten Adern mit dem jeweiligen Schutz von den neu hinzukommenden Kontaktierungsmaßnahmen unbeeinflußt bleiben.

Außerdem kann durch eine von der Darstellung in den Figuren abweichende Anordnung der Kontaktelemente und/oder der Kabelein-bzw. Ausführungen das Fassungsvermögen verändert werden.

Bezugszeichenliste

1 -Verzweigergehäuse
2 -Deckelteil
3 -Bodenteil
4 -Fixierungsmittel
5 -Fixierungsmittel
6 -Fixierungsmittel
7 -Befestigungsmittel
8 -Kabel
9 -Ader
10 -Einführungsdichtung
11 -Dichtung
12 -Schließdruckmittel
13 -Dorn
14 -Scharnier

15 -Anschlußeinheit
16 -Kontaktierungseinheit
17 -Befestigungsmittel
18 -Nut
19 -Überspannungsableiter
20 -Ausgangsdichtung
21 -Abfangvorrichtung
22 -Kontakteelement
23 -Federkontaktelement
24 -Kontaktelement
25 -Aussparung
26 -Aussaprung
27 -Aussparung
28 -Erdbolzen

## Ansprüche

1. Verzweigergehäuse für Nachrichtenkabel mit Kontaktelementen für ankommende und abgehende Kabel bzw. Leitungen, wobei der Anschlußraum in Längsrichtung geteilt und bei Bedarf zugänglich ist und bei dem Fixiereinrichtungen für die Kabel bzw. Leitungen vorgesehen sind, und bei dem weiterhin die Kontaktelemente im Bodenteil integriert sind, **dadurch gekennzeichnet**, daß Kontaktierungseinrichtungen (16) der Lage der Kontaktelemente der im Bodenteil (3) befindlichen Anschlußeinheit (15) entsprechend im Deckelteil (2) des Verzweigergehäuses (1) angeordnet sind.

2. Verzweigergehäuse nach Anspruch 1, **dadurch gekennzeichnet**, daß die Anschlußeinheit (15) aus einzelnen Kontaktelementen zusammengestellt ist.

3. Verzweigergehäuse nach Anspruch 1, **dadurch gekennzeichnet**, daß die Anschlußeinheit (15) als Komplettbaustein ausgebildet ist.

4. Verzweigergehäuse nach einem der vorhergehenden Ansprüche, **dadurch gekennzeichnet**, daß die Anschlußeinheit (15) des Verzweigergehäuses (1) materialschlüssig im Bodenteil (3) eingebettet ist.

5. Verzweigergehäuse nach einem der vorhergehenden Ansprüche, **dadurch gekennzeichnet**, daß die Fixiereinrichtungen (4, 5, 6, 13) im Bodenteil (3) des Verzweigergehäuses (1) angeordnet sind.

6. Verzweigergehäuse nach einem der vorhergehenden Ansprüche, **dadurch gekennzeichnet**, daß das Deckelteil (2) klappbar am Bodenteil (3) befestigt ist.

7. Verzweigergehäuse nach einem der vorhergehenden Ansprüche, **dadurch gekennzeichnet**, daß Schutzkappen für die Kontakte der Anschlußeinheit (15) in Aussparungen (25, 26) des Deckelteils (2) angeordnet sind, wobei diese Schutzkappen auf die Anschlußeinheit (15) gleichzeitig mit der Kontaktierung der Adern durch das Schließen des Deckelteils (2) aufsetzbar sind.

8. Verzweigergehäuse nach Anspruch 7, **dadurch gekennzeichnet**, daß einzelne Schutzkappen angeordnet sind.

9. Verzweigergehäuse nach Anspruch 7, **dadurch gekennzeichnet**, daß die Schutzkappen gruppenweise zusammengefaßt sind.

10. Verzweigergehäuse nach einem der vorhergehenden Ansprüche, **dadurch gekennzeichnet**, daß die Kontaktierungseinrichtungen (16) als Rippen im Deckelteil (2) in der den jeweiligen Kontakt der Anschlußeinheit (15) zugeordneten Lage ausgebildet sind.

11. Verzweigergehäuse nach einem der vorhergehenden Ansprüche, **dadurch gekennzeichnet**, daß die Fixierungseinrichtungen (4, 6) als nutartige Klemmen im Verzweigergehäuse (1) ausgebildet sind.

12. Verzweigergehäuse nach einem der vorhergehenden Ansprüche, **dadurch gekennzeichnet**, daß die Fixierungseinrichtungen (13) als Dorne ausgebildet sind.

13. Verzweigergehäuse nach Anspruch 7, **dadurch gekennzeichnet**, daß eine Schutzmasse, vor zugsweise ein Korrosionsschutzfett in den Schutzkappen angeordnet ist.

14. Verzweigergehäuse nach einem der vorhergehenden Ansprüche, **dadurch gekennzeichnet**, daß jedes Kontaktelement der Anschlußeinheit (15) Kontaktierungsmöglichkeiten, vorzugsweise Federkontakte (23), für Zusatzeinheiten (19) aufweist.

15. Verzweigergehäuse nach einem der vorhergehenden Ansprüche, **dadurch gekennzeichnet**, daß die Kabeleinführungen und die Leitungsabführungen anpaßbare Dichtungselemente (10, 11) aufweisen.

16. Verzweigergehäuse nach einem der vorhergehenden Ansprüche, **dadurch gekennzeichnet**, daß die Trennungsebene (27) des Verzweigergehäuses (1) zwischen dem Bodenteil (3) und dem Deckelteil (2) eine Elastomerabdichtung aufweist.

17. Verzweigergehäuse nach einem de vorhergehenden Ansprüche, **dadurch gekennzeichnet**, daß das Bodenteil (3) mit dem Deckelteil (2) über ein Scharnier (14) verbunden ist.

19. Verzweigergehäuse nach einem der vorhergehenden Ansprüche, **dadurch gekennzeichnet**, daß ein abnehmbares Zwischenstück zur Verhinderung des versehentlichen Schließens zwischen dem Bodenteil (3) und dem Deckelteil (2) angeordnet ist.

20. Verzweigergehäuse nach einem der vorhergehenden Ansprüche, **dadurch gekennzeichnet**, daß ein Schließdruckmittel (12) angeordnet ist.

21. Verzweigergehäuse nach einem der vorhergehenden Ansprüche, **dadurch gekennzeichnet,** daß das Schließdruckmittel (12) eine Rasterung gegen unbeabsichtigtes Schließen aufweist.

22. Verzweigergehäuse nach einem der vorhergehenden Ansprüche, **dadurch gekennzeichnet,** daß das Verzweigergehäuse (1) Befestigungsmittel (7, 17-18) in den beiden Gehäusehauptachsen aufweist.

23. Verzweigergehäuse nach einem der vorhergehen Ansprüche, **dadurch gekennzeichnet,** daß das Verteilergehäuse (1) in den zwei Hauptachsen montierbar ist.

# FIG 1

# FIG 2

# FIG 3